# EUROPEAN PATENT APPLICATION

(11) **EP 3 284 557 A1**
(43) Date of publication of application: **21.02.2018**
(21) Application number: 16779889.1
(22) Date of filing: 25.03.2016
(51) Int. Cl.: B23K 35/365, B23K 35/30, C22C 38/00, C22C 38/04, C22C 38/40

(54) **COATING AGENT AND COATED ARC WELDING ROD**

(30) Priority: 13.04.2015 JP 2015081994
(71) Applicant: Kabushiki Kaisha Kobe Seiko Sho (Kobe Steel, Ltd.), Kobe-shi, Hyogo 651-8585 (JP)
(72) Inventor: MIYATA, Minoru, Fujisawa-shi, Kanagawa 251-85551 (JP); SUZUKI,Reiichi, Fujisawa-shi, Kanagawa 251-85551 (JP)
(74) Representative: Müller-Boré & Partner Patentanwälte PartG mbB
(86) International application number: PCT/JP2016/059588
(87) International publication number: WO 2016/167098

(57) **Abstract**

The present invention provides the following: a covered flux which has a low chromium content and which can improve the fatigue strength of a weld in additional welding; and a covered electrode. The covered flux used for a covered electrode has a composition that contains, relative to the total mass of the covered flux, 35-55 mass % of a metal carbonate (in terms of CO₂), 10-30 mass % of a metal fluoride (in terms of F), and 8.5-20 mass % of Mn and/or 7.5-20 mass % of Ni. In addition, the covered electrode is obtained by coating an iron-based core wire with this covered flux.

## Description

### Technical Field

The present invention relates to a covered flux which is used for a covered electrode, and a covered electrode obtained by coating an iron-based core wire with the covered flux. More particularly, the invention relates to a covered flux for an electrode which is used for performing additional welding on the weld metal toe in main welding, and a covered electrode.

### Background Art

In steel structures, for the purpose of improving the fatigue strength of a weld joint and/or reducing residual stress and the like, an additional bead may be formed on the weld toe of the main welding in some cases. As a welding material used in welding for forming such an additional bead (additional welding), in general, a material having a composition different from that used for main welding is used (for example, refer to Patent Literature 1). Patent Literature 1 proposes a welding material for additional welding in which the welding material has a composition including 0.20% or less of C, 5.0% to 18.0% of Cr, and 3.0% to 15.0% of Ni, with the balance being Fe and incidental impurities, thereby achieving improvement in stress corrosion cracking resistance.

Furthermore, for the purpose of improving fatigue strength of a weld, there has been proposed a flux-cored wire in which the flux contains specific amounts of TiO₂, SiO₂, and Al₂O₃, and the entire wire contains, in percent by mass, 0.01% to 0.06% of C, 0.3% to 1.8% of Si, 0.7% to 2.7% of Mn, 15% to 17% of Cr, and 9% to 11% of Ni (Patent Literature 2). On the other hand, a low-hydrogen coated electrode has been used as a covered electrode, the low-hydrogen coated electrode being obtained by coating a steel core wire with a covered flux including a metal carbonate, CaF₂, TiO₂, ZrO₂, SiO₂, Al₂O₃, C, Si, Mn, Ni, Cr, Mo, and the like (refer to Patent Literature 3).

### Citation List

### Patent Literature

PTL 1: Japanese Unexamined Patent Application Publication No. 2004-42133
PTL 2: Japanese Unexamined Patent Application Publication No. 2002-307189
PTL 3: Japanese Unexamined Patent Application Publication No. 2010-110817

### Summary of Invention

### Technical Problem

The existing welding materials described above contain a large amount of Cr as an essential component. When additional welding is performed by using the welding materials, although the fatigue strength of the weld is improved, Cr degrades the hot crack resistance of the weld metal. Therefore, it is impossible to practically use them. Furthermore, since Cr is expensive, welding materials containing a large amount of Cr result in high costs. Therefore, there is a demand for an inexpensive welding material for additional welding.

Accordingly, it is a main object of the present invention to provide a covered flux which can improve the fatigue strength of a weld in additional welding and which has a low Cr content, and a covered electrode.

### Solution to Problem

A covered flux of the present invention is a covered flux used for a covered electrode and contains, relative to the total mass of the covered flux, 35% to 55% by mass of a metal carbonate in terms of CO₂, 10% to 30% by mass of a metal fluoride in terms of F, and at least one of 8.5% to 20% by mass of Mn and 7.5% to 20% by mass of Ni.

In the covered flux of the present invention, the total content of Mn and Ni, relative to the total mass of the covered flux, can be set to be, for example, 35% by mass or less.

The covered flux of the present invention may further contain, relative to the total mass of the covered flux, 5% by mass or less of Si.

The covered flux of the present invention may further contain, relative to the total mass of the covered flux, 0.5% to 3.0% by mass of Mg.

The covered flux of the present invention may further contain, relative to the total mass of the covered flux, 1.0% to 3.5% by mass of a Ti oxide in terms of Ti.

The covered flux of the present invention may further contain, relative to the total mass of the covered flux, 0.5% to 10% by mass of SiO₂.

Furthermore, as the metal carbonate, for example, either one or both of calcium carbonate and barium carbonate can be used.

Furthermore, as the metal fluoride, for example, either one or both of calcium fluoride and barium fluoride can be used.

A covered electrode of the present invention includes an iron-based core wire which is coated with the covered flux described above. In the covered electrode of the present invention, the coverage of the covered flux can be set to be 20% to 45% by mass relative to the total mass of the electrode.

Furthermore, the covered electrode of the present invention may contain, relative to the total mass of the electrode, at least one element selected from the group consisting of 0.1% to 1.5% by mass of Cr, 0.1% to 1.5% by mass of Mo, 0.1% to 1.0% by mass of W, 0.01% to 0.5% by mass of Nb, 0.01% to 0.5% by mass of V, 0.001% to 0.3% by mass of B, 0.001% to 0.03% by mass of P, and 0.001% to 0.03% by mass of S.

Furthermore, the iron-based core wire may be made of mild steel.

### Advantageous Effects of Invention

According to the present invention, because of active incorporation of Mn and/or Ni, even with a low Cr content, it is possible to improve the fatigue strength of a weld in additional welding.

### Brief Description of Drawings

[Fig. 1] Fig. 1 is a perspective view showing a double sided fillet weld joint used in experimental examples.
[Fig. 2] Fig. 2 is a side view showing a fatigue testing method.

### Description of Embodiments

Embodiments for carrying out the present invention will be described in detail below. However, it is to be understood that the present invention is not limited to the embodiments described below.

### (Covered electrode)

A covered electrode according to an embodiment of the present invention is obtained by coating an iron-based core wire serving as a core material with a covered flux. The covered flux contains, at least, 35% to 55% by mass of a metal carbonate in terms of CO₂, 10% to 30% by mass of a metal fluoride in terms of F, and either one or both of 8.5% to 20% by mass of Mn and 7.5% to 20% by mass of Ni.

### (Iron-based core wire)

The type of iron-based core wire can be appropriately selected depending on the base metal, welding conditions and the like. For example, in the case where a high-tensile strength steel with a tensile strength of 550 MPa or more is welded, use of a mild steel core wire is preferable in terms of production as well as cost. Specific examples of the mild steel core wire used for the covered electrode according to this embodiment include SWRY 11 specified in JIS G 3503:2006.

### (Coverage of covered flux relative to total mass of electrode: 20% to 45% by mass)

The coverage (%) of the covered flux on the covered electrode is calculated by the expression (mass of the covered flux/total mass of the electrode) × 100. When the coverage is less than 20% by mass, shielding may become insufficient and the N content and the hydrogen content in the weld metal may increase, resulting in degradation in toughness and cracking resistance of the weld metal. On the other hand, when the coverage exceeds 45% by mass, the arc may become unstable and the bead shape may become unsatisfactory. Therefore, in the low-hydrogen covered electrode according to this embodiment, preferably, the coverage of the covered flux is set to be 20% to 45% by mass.

### (Covered flux)

The reasons for limiting the components of the covered flux of the covered electrode according to this embodiment will be described below. Note that the contents of the components described below are the contents relative to the total mass of the covered flux.

### [Metal carbonate: 35% to 55% by mass in terms of CO₂]

The metal carbonate decomposes in an arc to form CO₂ gas. The CO₂ gas protects the weld metal from the air, thus exhibiting effects of suppressing occurrence of porosity and improving arc stability. However, when the content of the metal carbonate in the covered flux is less than 35% by mass, these effects cannot be obtained sufficiently. On the other hand, when the content of the metal carbonate exceeds 55% by mass, the arc becomes unstable, resulting in an increase in the amount of spatter generated. Therefore, the content of the metal carbonate in the covered flux is set to be 35% to 55% by mass. Note that the content of the metal carbonate is in terms of CO₂, and the same applies to the description below.

As the metal carbonate used for the covered flux according to this embodiment, from the viewpoint of production cost, calcium carbonate (CaCO₃) and barium carbonate (BaCO₃) are preferable. The calcium carbonate and barium carbonate may be used alone, together, or in combination with other metal carbonates. In the case where a plurality of metal carbonates are used, the total content thereof is set within a range of 35 to 55% by mass.

### [Metal fluoride: 10% to 30% by mass in terms of F]

The metal fluoride has an effect of lowering the melting point of slag to improve fluidity so that a satisfactory bead shape can be obtained. Furthermore, when the metal fluoride is added, fluorine produced by decomposition reacts with hydrogen in the molten metal and/or molten slag, and the hydrogen partial pressure in the molten metal can be decreased. Therefore, it is also possible to lower the hydrogen content in the weld metal. However, when the content of the metal fluoride in the covered flux is less than 10% by mass, the effects described above cannot be obtained sufficiently. On the other hand, when the content of the metal fluoride exceeds 30% by mass, the arc becomes unstable, resulting in an increase in the amount of spatter generated. Therefore, the content of the metal fluoride in the covered flux is set to be 10% to 30% by mass. Note that the content of the metal fluoride is in terms of F, and the same applies to the description below.

As the metal fluoride used for the covered flux according to this embodiment, from the viewpoint of production cost, calcium fluoride (CaF₂) and barium fluoride (BaF₂) are preferable. The calcium fluoride and barium fluoride may be used alone, together, or in combination with other metal fluorides. In the case where a plurality of metal fluorides are used, the total content thereof is set within a range of 10% to 30% by mass.

### [At least one of 8.5% to 20% by mass of Mn and 7.5% to 20% by mass of Ni]

Mn and Ni are major elements of the covered flux of the present invention and have an effect of improving the fatigue strength of a weld. However, when the Mn content is less than 8.5% by mass and the Ni content is less than 7.5% by mass, the effect of improving the fatigue strength of a weld cannot be obtained. Furthermore, when the Mn content exceeds 20% by mass or the Ni content exceeds 20% by mass, hot cracks occur in the weld metal. Therefore, either one or both of Mn and Ni are added to the covered flux within a range of 8.5% to 20% by mass and a range of 7.5% to 20% by mass, respectively.

From the viewpoint of improving hot crack resistance, preferably, the upper limit of the Mn content in the covered flux is set to be 15% by mass or less and the upper limit of the Ni content is set to be 15% or less.

Furthermore, in the case where it is necessary to secure toughness, the upper limit of the total content of Mn and Ni is set to be preferably 35% by mass or less, and more preferably 29% by mass or less.

### [Si: 5% by mass or less (including 0% by mass]

Si is a deoxidizer and effective in decreasing the oxygen content in the weld metal and improving strength. Accordingly, Si can be added as necessary. However, when Si is added in an amount exceeding 5% by mass to the covered flux, hot cracks are likely to occur in the resulting weld metal. Therefore, when Si is added to the covered flux, the content thereof is preferably set to be 5% by mass or less.

### [Mg: 0.5% to 3.0% by mass]

Mg adds the oxygen content in the weld metal and is effective in improving the toughness of the weld metal. Accordingly, Mg can be added as necessary. However, when the Mg content in the covered flux is less than 0.5% by mass, it is not possible to sufficiently obtain an effect of improving the toughness of the weld metal. Furthermore, when Mg is added in an amount exceeding 3.0% by mass to the covered flux, the arc becomes unstable, resulting in an increase in the amount of spatter generated. Therefore, when Mg is added to the covered flux, the content thereof is preferably set in a range of 0.5% to 3.0% by mass.

### [Ti oxide: 1.0% to 3.5% by mass in terms of Ti]

TiO₂ acts as a slag forming flux and is effective in improving the bead shape and appearance. However, when the content of the Ti oxide in the covered flux is less than 1.0% by mass, the effect described above cannot be obtained sufficiently. Furthermore, when the Ti oxide is added in an amount exceeding 3.5% by mass to the covered flux, the oxygen content in the weld metal increases, resulting in degradation in toughness. Therefore, when the Ti oxide is added to the covered flux, the content of the Ti oxide is preferably set in a range of 1.0% to 3.5% by mass. In the case where a plurality of Ti oxides are used, preferably, the total content thereof is set within a range of 1.0% to 3.5% by mass. Note that the content of the Ti oxide is in terms of Ti, and the same applies to the description below.

### [SiO₂: 0.5% to 10% by mass]

SiO₂ acts as a slag forming flux and/or tackifier and is added to the covered flux as necessary. However, when the content of SiO₂ in the covered flux is less than 0.5% by mass, the effect described above cannot be obtained sufficiently. Furthermore, when SiO₂ is added in an amount exceeding 10% by mass, the slag becomes glassy, and removability of slag is degraded. Therefore, when SiO₂ is added to the covered flux, the content thereof is preferably set in a range of 0.5% to 10% by mass.

### [Balance]

The covered flux according to this embodiment may contain, in addition to the components described above, a metallic Ti compound, Nb, V, B, Cr, Mo, W, Zr, K, Ca, and the like.

### (Other components of electrode)

The covered electrode according to this embodiment may contain, relative to the total mass of the electrode, at least one element selected from the group consisting of 0.1% to 1.5% by mass of Cr, 0.1% to 1.5% by mass of Mo, 0.1% to 1.0% by mass of W, 0.01% to 0.5% by mass of Nb, 0.01% to 0.5% by mass of V, 0.001% to 0.3% by mass of B, 0.001% to 0.03% by mass of P, and 0.001% to 0.03% by mass of S. These elements may be incorporated in either one or both of the covered flux and the core material.

Cr, Mo, W, Nb, V, B, P, and S are elements that affect the strength and/or toughness of the weld metal, and addition of these elements within the ranges described above can improve mechanical properties of the weld metal. On the other hand, when the amounts of these elements added are below the ranges described above, the effect of addition cannot be obtained. When these elements are added in amounts above the ranges described above, the strength of the weld metal increases excessively, and toughness is degraded.

The other components in the covered electrode according to this embodiment, i.e., the balance, are Fe and incidental impurities.

In the covered electrode according to this embodiment, by increasing the contents of Mn and Ni compared to the existing covered fluxes, even if the Cr content is suppressed to 0.1% to 1.5% by mass relative to the total mass of the electrode, the fatigue strength of the weld can be improved at the time of additional welding on the toe of the main weld.

### EXAMPLES

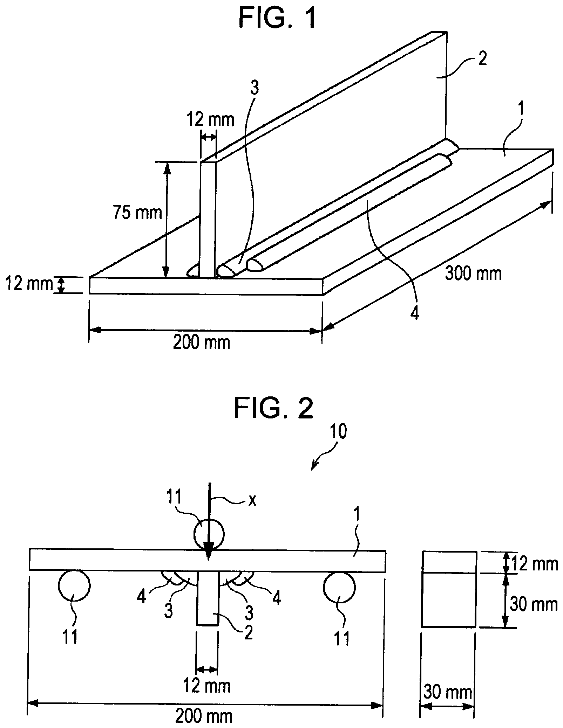

The advantageous effects of the present invention will be specifically described below with reference to experimental examples of the present invention. Fig. 1 is a perspective view showing a double sided fillet weld joint used for evaluation. In the experimental examples, by using core wires Nos. A to C shown in Table 1 below and covered fluxes shown in Table 2 below, covered electrodes in the experimental examples were produced. At this time, the diameter of the electrode was set to be 3.2 mm, and the coverage of the covered flux was set in a range of 35% by mass relative to the total mass of the electrode. Note that the chemical composition of the core wire (mass%) shown in Table 1 is expressed as a percentage by mass relative to the total mass of the core wire. Furthermore, the components of the covered flux (mass%) shown in Table 2 are expressed as a percentage by mass relative to the total mass of the covered flux, and the components of the electrode (mass%) are expressed as a percentage by mass relative to the total mass of the electrode.

### [Table 1]

**Table 1**

| No. | Chemical composition of core wire (mass%) | | | |
|---|---|---|---|---|
| | C | Si | Mn | Balance |
| A | 0.02 | 0.1 | 0.4 | Fe and incidental impurities |
| B | 0.01 | 0.05 | 0.01 | |
| C | 0.01 | 0.2 | 0.1 | |

### [Table 2]

**Table 2**

| | No. | Core Wire No. | Components of covered flux (mass%) | | | | | | | | | | | | | Components of covered electrode (mass%) | |
|---|---|---|---|---|---|---|---|---|---|---|---|---|---|---|---|---|---|
| | | | Metal carbonate | | | Metal fluoride | | | Mn | Ni | Mn+Ni | Si | SiO₂ | Mg | Ti | Others | Balance |
| | | | CaCO₃ | Others | Total | CaF₂ | BaF₂ | Total | | | | | | | | | |
| | 1 | A | 35 | 10 | 45 | 17 | 3 | 20 | 8.5 | 7.5 | 16.0 | 1.7 | 1.8 | 2.3 | 1.8 | | |
| | 2 | B | 20 | 21 | 41 | 18 | 5 | 23 | 8.7 | 10.2 | 18.9 | 3.0 | 3.5 | 2.7 | 2.5 | | |
| | 3 | B | 20 | 35 | 55 | 9 | 4 | 13 | 8.5 | 14.8 | 23.3 | 1.5 | 2.0 | 1.3 | 1.4 | W:1.5 | |
| | 4 | C | 45 | 3 | 48 | 12 | - | 12 | 8.9 | 20.0 | 28.9 | 0.7 | 1.4 | 2.8 | 1.9 | | |
| | 5 | C | 40 | 2 | 42 | 17 | - | 17 | 10.5 | 7.5 | 18.0 | 4.8 | 10.0 | 0.5 | 1.2 | Mo:0.3 | |
| | 6 | A | 37 | - | 37 | 30 | - | 30 | 14.7 | 7.7 | 22.4 | 1.7 | 2.5 | 1.2 | 1.0 | | |
| | 7 | A | 42 | - | 42 | 20 | - | 20 | 20.0 | 7.6 | 27.6 | 2.4 | 0.5 | 1.8 | 3.0 | Mo:0.5 | |
| | 8 | B | 43 | - | 43 | 21 | - | 21 | 9.2 | 10.3 | 19.5 | 3.4 | 5.3 | 2.8 | 2.8 | | |
| | 9 | A | 43 | 1 | 44 | 22 | - | 22 | 12.0 | 9.8 | 21.8 | 0.5 | - | 1.5 | 2.4 | Cr:2.4 | |
| | 10 | C | 42 | - | 42 | 7 | 12 | 19 | 9.8 | 14.2 | 24.0 | 3.4 | 4.7 | 2.5 | 2.3 | Cr:0.2 | |
| | 11 | A | 45 | 3 | 48 | 8 | 5 | 13 | 9.7 | 10.5 | 20.2 | 3.5 | 4.7 | 2.5 | 1.5 | | Fe and |
| Experimental Example | 12 | B | 47 | 3 | 50 | 5 | 7 | 12 | 8.5 | 9.5 | 18.0 | 2.8 | 2.5 | 3.0 | 3.5 | | incidental |
| | 13 | A | 30 | 5 | 35 | 21 | - | 21 | 18.5 | 16.5 | 35.0 | 1.5 | 2.7 | 0.8 | 1.2 | Cr:0.5 | impurities |
| | 14 | A | 30 | 5 | 35 | 21 | - | 21 | 18.3 | 15.2 | 33.5 | 1.5 | 2.7 | 0.8 | 1.2 | Cr:0.5 | |
| | 15 | A | 30 | 5 | 35 | 21 | - | 21 | 14.5 | 15.7 | 30.2 | 1.5 | 2.7 | 0.8 | 1.2 | Cr:0.5 | |
| | 16 | A | 37 | 15 | 52 | 15 | - | 15 | 8.4 | 6.5 | 17.9 | 3.2 | 4.5 | 0.5 | 1.2 | | |
| | 17 | B | 40 | 1 | 41 | 12 | - | 12 | 20.2 | 10.5 | 30.7 | 2.5 | 3.6 | 2.8 | 2.3 | | |
| | 18 | C | 42 | - | 42 | 12 | - | 12 | 8.8 | 20.1 | 28.9 | 2.8 | 3.5 | 2.5 | 2.1 | | |
| | 19 | A | 25 | 8 | 33 | 10 | 5 | 15 | 10.5 | 9.8 | 20.3 | 1.5 | 2.1 | 2.7 | 1.8 | | |
| | 20 | A | 35 | 12 | 47 | 3.5 | 4 | 7.5 | 10.5 | 11.2 | 21.7 | 4.8 | 3.5 | 1.8 | 1.6 | | |
| | 21 | C | 60 | 4 | 64 | - | - | 0 | 9.8 | 9.7 | 19.5 | 3.5 | 4.2 | 1.9 | 2.5 | | |
| | 22 | B | 45 | 1 | 46 | 21 | - | 21 | 9.5 | 10.8 | 20.3 | 2.8 | 2.5 | 4.6 | 1.8 | | |
| | 23 | A | 35 | 10 | 45 | 9 | 4 | 13 | 20.4 | 20.1 | 40.5 | 2.5 | 4.6 | 2.4 | 2.1 | | |

Next, main welding was performed on base metals 1 and 2 having the composition shown in Table 3 below by using a flux-cored wire corresponding to T 49J 0 T1-0 C A-U specified in JIS Z 3313:2009 and using CO₂ (100%) as a shielding gas, at a welding current of 280 A and a welding speed of 45 cm/min such that the lower leg length became 6 mm. Then, additional welding was performed on the weld toe in the weld metal 3 of the main welding on the base metal 1 side by using each of the covered electrodes of the experimental examples, at a welding current of 140 A and a welding speed of 20 cm/min such that the lower leg length became 10 mm. Thereby, a double sided fillet weld joint shown in Fig. 1 was produced. Note that the base metal composition (mass%) shown in Table 3 is expressed as a percentage by mass relative to the total mass of the base metal.

### [Table 3]

**Table 3**

| Base metal composition (mass%) | | | | | | | |
|---|---|---|---|---|---|---|---|
| C | Si | Mn | P | S | Cr | Ni | Balance |
| 0.15 | 0.28 | 1.46 | 0.005 | 0.005 | 0.02 | 0.01 | Fe and incidental impurities |

### <Fatigue test>

Fig. 2 is a side view showing a fatigue testing method. The fatigue strength was evaluated by cutting out a test piece 10 shown in Fig. 2 from the double sided fillet weld joint shown in Fig. 1 and conducting a partially pulsating three-point bending fatigue test. The test was performed by using a 200kN fatigue testing machine (PA24901) manufactured by Takes Group Ltd., under the following test conditions: environmental temperature: room temperature, distance between supporting points 11 on the side of the base metal 1 on which the base metal 2 is welded: 150 mm, load control: with a sinusoidal wave, frequency: 15 Hz, stress amplitude: 300 MPa, and stress ratio: 0.1 (partial pulsation). Note that the arrow × shown in Fig. 2 represents the direction in which the load is applied.

The test piece that was not broken even when the number of repetitions reached 50,000 was evaluated to be "○" (good), and the test piece that was broken by the time the number of repetitions reached 50,000 was evaluated to be "x" (poor).

### <Hot crack resistance>

Regarding the hot crack resistance of the weld metal, a FISCO test was conducted in accordance with JIS Z 3155:1993, and evaluation was made on the basis of the result thereof. At this time, the welding current was set to be 140 A, and the welding speed was set to be 15 cm/min and 30 cm/min. After the welding, an X-ray radiographic test was conducted. The test piece in which cracks occurred under both conditions was evaluated to be "x" (poor), the test piece in which cracks occurred under one of the conditions was evaluated to be "Δ" (average), and the test piece in which no cracks occurred under any of the conditions was evaluated to be "○" (good).

### <Toughness>

The toughness was evaluated by measuring the 0°C Charpy absorbed energy of the all-weld metal. The measured energy of 47 J or more was evaluated to be "⊙" (very good), the measured energy of less than 47 J and 34 J or more was evaluated to be "○" (good), and the measured energy of less than 34 J was evaluated to be "×" (poor).

The results are summarized in Table 4 below.

### [Table 4]

**Table 4**

| | No. | Fatigue strength | Toughness vE0°C | Hot crack |
|---|---|---|---|---|
| | 1 | ○ | ⊙ | ○ |
| | 2 | ○ | ⊙ | ○ |
| | 3 | ○ | ⊙ | ○ |
| | 4 | ○ | ⊙ | ○ |
| | 5 | ○ | ⊙ | ○ |
| | 6 | ○ | ⊙ | ○ |
| | 7 | ○ | ⊙ | ○ |
| | 8 | ○ | ⊙ | ○ |
| | 9 | ○ | ⊙ | ○ |
| | 10 | ○ | ⊙ | ○ |
| | 11 | ○ | ⊙ | ○ |
| Experimental | 12 | ○ | ⊙ | ○ |
| Example | 13 | ○ | ○ | ○ |
| | 14 | ○ | ○ | ○ |
| | 15 | ○ | ○ | ○ |
| | 16 | × | ⊙ | ○ |
| | 17 | ○ | ○ | Δ |
| | 18 | ○ | ⊙ | Δ |
| | 19 | ○ | ⊙ | ○ |
| | 20 | ○ | ⊙ | ○ |
| | 21 | ○ | ⊙ | ○ |
| | 22 | ○ | ⊙ | ○ |
| | 23 | ○ | × | × |

As shown in Table 4 above, regarding the covered electrode of No. 16, both the Mn content and the Ni content, relative to the total mass of the covered flux, are less than the specified values, and therefore, the fatigue strength is low and evaluated to be poor. On the other hand, regarding the covered electrode of No. 17, since the Mn content relative to the total mass of the covered flux exceeds 20% by mass, the hot crack resistance is poor. Regarding the covered electrode of No. 18, since the Ni content relative to the total mass of the covered flux exceeds 20% by mass, the hot crack resistance is poor. Regarding the covered electrode of No. 19, since the content of the metal carbonate relative to the total mass of the covered flux is less than 35% by mass, porosity occurs. On the other hand, regarding the covered electrode of No. 20, since the content of the metal fluoride relative to the total mass of the covered flux is less than 10% by mass, porosity occurs. Furthermore, regarding the covered electrode of No. 21, since the content of the metal carbonate relative to the total mass of the covered flux exceeds 55% by mass, the arc becomes unstable. Regarding the covered electrode of No. 22, since the Mg content relative to the total mass of the covered flux exceeds 3% by mass, the arc becomes unstable. Regarding the covered electrode of No. 23, since the Mn content and the Ni content, relative to the total mass of the covered flux, each exceed 20% by mass, and since the total content of Mn and Ni relative to the total mass of the covered flux exceeds 35% by mass, the hot crack resistance and toughness are poor.

In contrast, regarding the covered electrodes of Nos. 1 to 15, all of the fatigue strength, toughness, and hot crack resistance are excellent.

These results confirm that according to the present invention, it is possible to improve the fatigue strength of a weld in additional welding.

Embodiments of the present can include the following constitutions:
[1] A covered flux which is used for a covered electrode, the covered flux comprising, relative to the total mass of the covered flux:
   35% to 55% by mass of a metal carbonate in terms of CO₂;
   10% to 30% by mass of a metal fluoride in terms of F; and
   at least one of 8.5% to 20% by mass of Mn and 7.5% to 20% by mass of Ni.
[2] The covered flux according to [1], wherein the total content of Mn and Ni, relative to the total mass of the covered flux, is 35% by mass or less.
[3] The covered flux according to [1] or [2], further comprising, relative to the total mass of the covered flux, 5% by mass or less of Si.
[4] The covered flux according to any one of [1] to [3], further comprising, relative to the total mass of the covered flux, 0.5% to 3.0% by mass of Mg.
[5] The covered flux according to any one of [1] to [4], further comprising, relative to the total mass of the covered flux, 1.0% to 3.5% by mass of a Ti oxide in terms of Ti.
[6] The covered flux according to any one of [1] to [5], further comprising, relative to the total mass of the covered flux, 0.5% to 10% by mass of SiO₂.
[7] The covered flux according to any one of [1] to [6], wherein the metal carbonate is either one or both of calcium carbonate and barium carbonate.
[8] The covered flux according to any one of [1] to [7], wherein the metal fluoride is either one or both of calcium fluoride and barium fluoride.
[9] A covered electrode comprising an iron-based core wire which is coated with the covered flux according to any one of [1] to [8].
[10] The covered electrode according to [9], wherein the coverage of the covered flux is 20% to 45% by mass relative to the total mass of the electrode.
[11] The covered electrode according to [9] or [10], wherein the covered electrode comprises, relative to the total mass of the electrode, at least one element selected from the group consisting of 0.1% to 1.5% by mass of Cr, 0.1% to 1.5% by mass of Mo, 0.1% to 1.0% by mass of W, 0.01% to 0.5% by mass of Nb, 0.01% to 0.5% by mass of V, 0.001% to 0.3% by mass of B, 0.001% to 0.03% by mass of P, and 0.001% to 0.03% by mass of S.
[12] The covered electrode according to any one of [9] to [11], wherein the iron-based core wire is made of mild steel.

The present application claims priority to Japanese Patent Application No. 2015-081994 filed in the Japan Patent Office on April 13, 2015, the entire contents of which are incorporated herein by reference.

### Reference Signs List

1, 2 base metal
3 weld metal by main welding
4 weld metal by additional welding
10 test piece
11 supporting point
× direction in which load is applied

## Claims

1. A covered flux which is used for a covered electrode, the covered flux comprising, relative to the total mass of the covered flux:
35% to 55% by mass of a metal carbonate in terms of CO₂;
10% to 30% by mass of a metal fluoride in terms of F; and
at least one of 8.5% to 20% by mass of Mn and 7.5% to 20% by mass of Ni.

2. The covered flux according to Claim 1, wherein the total content of Mn and Ni, relative to the total mass of the covered flux, is 35% by mass or less.

3. The covered flux according to Claim 1 or 2, further comprising, relative to the total mass of the covered flux, 5% by mass or less of Si.

4. The covered flux according to Claim 1 or 2, further comprising, relative to the total mass of the covered flux, 0.5% to 3.0% by mass of Mg.

5. The covered flux according to Claim 1 or 2, further comprising, relative to the total mass of the covered flux, 1.0% to 3.5% by mass of a Ti oxide in terms of Ti.

6. The covered flux according to Claim 1 or 2, further comprising, relative to the total mass of the covered flux, 0.5% to 10% by mass of SiO₂.

7. The covered flux according to Claim 1 or 2, wherein the metal carbonate is either one or both of calcium carbonate and barium carbonate.

8. The covered flux according to Claim 1 or 2, wherein the metal fluoride is either one or both of calcium fluoride and barium fluoride.

9. A covered electrode comprising an iron-based core wire which is coated with the covered flux according to Claim 1 or 2.

10. The covered electrode according to Claim 9, wherein the coverage of the covered flux is 20% to 45% by mass relative to the total mass of the electrode.

11. The covered electrode according to Claim 9, wherein the covered electrode comprises, relative to the total mass of the electrode, at least one element selected from the group consisting of 0.1% to 1.5% by mass of Cr, 0.1% to 1.5% by mass of Mo, 0.1% to 1.0% by mass of W, 0.01% to 0.5% by mass of Nb, 0.01% to 0.5% by mass of V, 0.001% to 0.3% by mass of B, 0.001% to 0.03% by mass of P, and 0.001% to 0.03% by mass of S.

12. The covered electrode according to Claim 9, wherein the iron-based core wire is made of mild steel.
